Europäisches Patentamt

European Patent Office

Office européen des brevets

(11) Veröffentlichungsnummer: **0 367 929**

**A2**

(12) **EUROPÄISCHE PATENTANMELDUNG**

(21) Anmeldenummer: **89115913.9**

(22) Anmeldetag: **29.08.89**

(51) Int. Cl.⁵: **H04N 5/44**

(30) Priorität: **11.11.88 DE 3838204**

(43) Veröffentlichungstag der Anmeldung:
**16.05.90 Patentblatt 90/20**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Maul, Konrad, Dipl.-Ing. (FH) Grundig**
**E.M.V.**
**El. M. Grundig holland Stiftung Co. Kg.**
**Kurgartenstrasse 37 D-8510 Fuerth(DE)**

(54) **Anordnung zur Reduzierung des Flimmerns in Fernsehempfängern.**

(57) Bei einer bekannten Anordnung wird unter Verwendung eines Halbbildspeichers die Bildwechselfrequenz eines Fernsehsignals verdoppelt. In einer ersten Betriebsart wird dabei jedes Halbbild des Fernsehsignals in den Halbbildspeicher eingeschrieben und mit doppelter Frequenz zweimal ausgelesen. In einer zweiten Betriebsart wird nur jedes zweite Halbbild in den Halbbildspeicher eingeschrieben und mit doppelter Frequenz viermal ausgelesen. Mittels der neuen Anordnung soll auf einfache Art und Weise eine Umschaltung zwischen den beiden Betriebsarten erfolgen.

Hierzu wird der Speichersteuerschaltung über den I²C-Bus des Fernsehempfängers ein in der Bedieneinheit erzeugtes Steuersignal zugeführt. Alternativ dazu kann zur Umschaltung auch ein im Fernsehsender erzeugtes, in den Austastlücken des Fernsehsignals übertragenes und im Fernsehempfänger in einer Abtrennschaltung vom Fernsehsignal abgetrenntes Kennsignal verwendet werden.
Fernsehempfänger

## ANORDNUNG ZUR REDUZIERUNG DES FLIMMERNS IN FERNSEHEMPFÄNGERN

Die Erfindung betrifft eine Anordnung zur Reduzierung des Flimmerns in Fernsehempfängern mit den im Oberbegriff des Anspruchs 1 angegebenen Merkmalen.

Eine derartige Anordnung ist aus der Zeitschrift "Siemens Components", 1988, S. 3-7, bekannt.

Ausgehend von diesem Stand der Technik liegt der Erfindung die Aufgabe zugrunde, einen Weg aufzuzeigen, wie auf einfache Art und Weise eine Umschaltung zwischen den beiden Betriebszuständen erfolgen kann.

Diese Aufgabe wird bei einer Anordnung der im Oberbegriff des Anspruchs 1 angegebenen Art durch die im kennzeichnenden Teil des Anspruchs 1 angegebenen Merkmale gelöst. Eine alternative Lösungsmöglichkeit ist Gegenstand des nebengeordneten Anspruchs 2. Eine vorteilhafte Ausgestaltung der im Anspruch 2 angegebenen Lösung ist im Anspruch 3 angegeben.

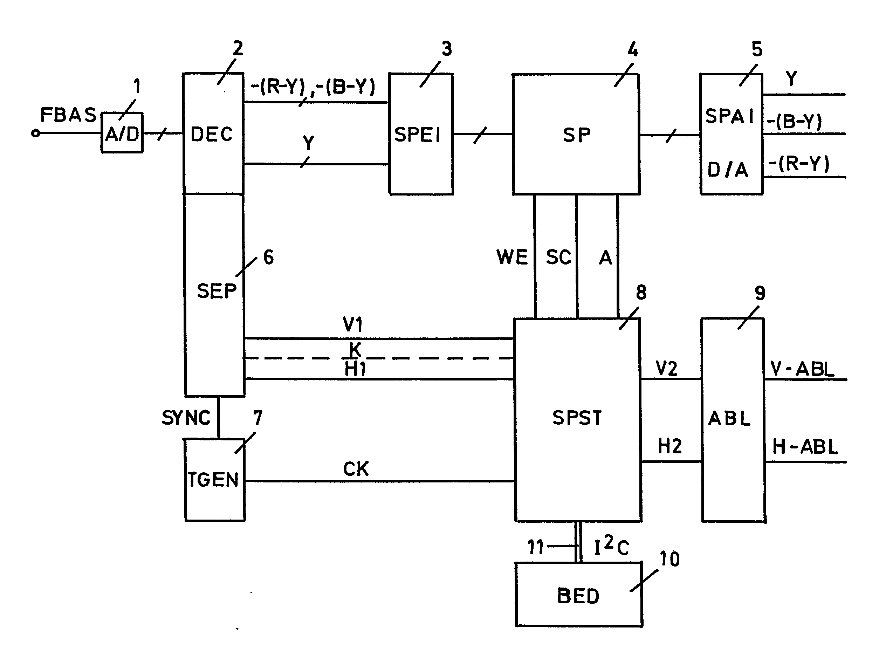

Die Vorteile der beanspruchten Anordnung ergeben sich aus der Erläuterung eines Ausführungsbeispiels anhand der Figur.

Die gezeigte Anordnung enthält einen Analog/Digital-Wandler 1, einen Farbdecoder 2, ein Speichereingangsinterface 3, einen Halbbildspeicher 4, ein Speicherausgangsinterface 5, in dem auch eine Digital/Analog-Wandlung des Signals erfolgt, eine Synchronabtrennschaltung 6, einen Taktgenerator 7, eine Speichersteuerschaltung 8, einen Ablenkgenerator 9, eine Bedieneinheit 10 und einen I²C-Bus 11.

Ein am Eingang der Anordnung anliegendes herkömmliches PAL-FBAS-Signal mit einer Bildwechselfrequenz von 50 Hz und einer Zeilenfrequenz von 15,625 KHz wird dem Analog/Digital-Wandler 1 zugeführt. Im Analog/Digital-Wandler 1 wird das FBAS-Signal einer Analog/Digital-Wandlung unterworfen und in Form eines 7-Bit breiten Datenflusses an den Farbdecoder 2 angelegt. Am Ausgang des Farbdecoders 2 stehen getrennte Signale für die Luminanzkomponente Y und die Farbdifferenzsignale - (R-Y) und - (B-Y) zur Verfügung. Die Luminanzkomponente Y wird in Form eines ersten Datenflusses und die Farbdifferenzsignale - (R-B) und - (B-Y) werden zeitlich nacheinander in Form eines zweiten Datenflusses einem Speichereingangsinterface 3 zugeführt. Dort erfolgt eine Datenumsetzung bzw. Taktratenkonversion. Die Ausgangssignale des Speichereingangsinterfaces 3 werden in einen Halbbildspeicher 4 eingeschrieben.

Dieser Einschreibvorgang erfolgt unter Steuerung durch eine Speichersteuerschaltung 8, die dem Halbbildspeicher 4 ein Schreib-/Lese-Steuersignal WE, ein Adreßsignal A und ein Taktsignal SC zuführt. Das Schreib-/Lese-Steuersignal WE, das Adreßsignal A und das Taktsignal SC werden in der Speichersteuerung 8 unter Auswertung der aus dem Eingangssignal in der Synchronsignalabtrennstufe 6 abgetrennten Vertikalsynchronimpulse V1 und Horizontalsynchronimpulse H1 sowie des Taktsignals CK ermittelt. Das Taktsignal CK wird in einem Taktgenerator 7 erzeugt, welchem die in der Synchronsignalabtrennstufe 6 abgetrennten Synchronsignale zugeführt werden, und ist zeilenfrequenzverkoppelt.

Die Speichersteuerschaltung 8 stellt an ihrem Ausgang weiterhin Horizontalsynchronimpulse H2 und Vertikalsynchronimpulse V2 mit einer Frequenz von 31,35 KHz bzw. 100 Hz zur Verfügung. Diese werden dem Ablenkgenerator 9 zugeführt und dort in Horizontal- bzw. Vertikalablenksignale umgesetzt, welche den Ablenkspulen des Fernsehempfängers zugeführt werden.

Die im Halbbildspeicher 4 abgespeicherten Signale werden unter Verwendung des Taktsignals SC doppelt so schnell wie beim Einschreiben aus dem Halbbildspeicher 4 ausgelesen und über ein Speicherausgangsinterface 5, in dem auch eine Digital/Analog-Wandlung der Signale erfolgt, einem RGB-Prozessor zugeführt, dessen Ausgangssignale über die RGB-Endstufen der Bildröhre zugeführt werden.

Die gezeigte Anordnung weist zwei verschiedene Betriebszustände auf:

Im ersten Betriebszustand erfolgt die Adressierung des Halbbildspeichers 4 derart, daß beim Einschreiben jedes Halbbild des Fernsehsignals in den Halbbildspeicher 4 eingeschrieben und doppelt so schnell zweimal nacheinander ausgelesen wird. Das derart ausgelesene Signal wird im Zeilensprungverfahren auf dem Bildschirm dargestellt. Die damit erzielte Erhöhung der Bildwechselfrequenz von 50 auf 100 Hz führt zu einer Reduzierung des Großflächenflimmerns.

Im zweiten Betriebszustand wird nur jedes zweite Halbbild in den Halbbildspeicher 4 eingeschrieben und doppelt so schnell viermal nacheinander ausgelesen. Das viermal nacheinander aus dem Halbbildspeicher 4 ausgelesene Signal wird nach dem sog. synthetischen Zeilensprungverfahren auf dem Bildschirm dargestellt. Dieser zweite Betriebszustand ist besonders dann vorteilhaft, wenn der momentan empfangene Sendebeitrag senderseitig durch eine Filmabtastung gewonnen wurde. In diesem Fall spielt nämlich die im zweiten Betriebszustand vorliegende verringerte zeitliche Auflösung keine Rolle, da beim Film ohnehin nur 25 Bewegungsphasen pro Sekunde vorliegen. Der zweite Betriebszustand ist ferner dann vorteilhaft, wenn der momentan empfangene Sendebeitrag durch Fernsehkameraabtastung entstanden ist und in der abgetasteten Szene wenig Bewegungen auftreten, wie z.B. bei Nachrichtensendungen.

Bei diesem zweiten Betriebszustand tritt zwar ein Auflösungsverlust in vertikaler Richtung auf, jedoch wird der gesamte Bildeindruck wesentlich ruhiger und für das menschliche Auge angenehmer, da das Zwischenzeilenflimmern nicht mehr erkennbar ist.

Die Umschaltung zwischen den beiden Betriebszuständen geschieht wie folgt:

Bei einer ersten Ausführungsform der Erfindung wird der Speichersteuerschaltung 8 über den I²C-Bus 11 des Fernsehempfängers ein Steuerbefehl zugeführt, der mittels der Bedieneinheit eingegeben wird. Damit erhält der Fernsehzuschauer die Möglichkeit, selbst zwischen den beiden oben beschriebenen Betriebszuständen umzuschalten.

Bei einer zweiten Ausführungsform der Erfindung wird der Speichersteuerschaltung 8 ein Kennsignal K zugeführt. Dieses Kennsignal K gibt Auskunft über die Art und Weise der Fernsehsignalerzeugung und wird in der Speichersteuerschaltung 8 zur Umschaltung zwischen den beiden Betriebszuständen verwendet. Wird das Fernsehsignal durch Filmabtastung gewonnen, so hat das Kennsignal K einen charakteristischen Zustand, aufgrund dessen die Speichersteuerschaltung 8 den Halbbildspeicher 4 im Sinne des zweiten Betriebszustandes ansteuert.

Dieses Kennsignal K wird im Fernsehsender erzeugt, in einer der Austastlücken des Fernsehsignals zum Empfänger übertragen und dort mittels einer Kennsignalabtrennschaltung vom Fernsehsignal abgetrennt. Im gezeigten Ausführungsbeispiel erfolgt die Abtrennung des Kennsignals in der Schaltung 6, die folglich bei dieser Ausführungsform neben Schaltmitteln zur Synchronimpulsabtrennung auch Schaltmittel zur Abtrennung des Kennsignals enthält. Die Umschaltung zwischen den beiden Betriebszuständen erfolgt bei dieser Ausführungsform demnach sendergesteuert. Eine Realisierung dieser Ausführungsform kann darin bestehen, das Kennsignal im Rahmen des VPS-Codes zu übertragen, in welchem ohnehin eine Senderkennung enthalten ist.

## Ansprüche

1. Anordnung zur Reduzierung des Flimmerns in Fernsehempfängern mit
- einem Halbbildspeicher, in den ein eine erste Bildwechselfrequenz aufweisendes Fernsehsignal eingeschrieben wird, und aus dem das Fernsehsignal doppelt so schnell ausgelesen wird, so daß das ausgelesene Signal die doppelte Bildwechselfrequenz aufweist,

- einer Schaltung zur Abtrennung der Synchronimpulse aus dem Fernsehsignal,
- einem Taktgenerator, welcher unter Verwendung der Synchronimpulse ein zeilenfrequenzverkoppeltes Taktsignal erzeugt,
- einer Speichersteuerschaltung, der das zeilenfrequenzverkoppelte Taktsignal und die aus dem Fernsehsignal abgetrennten Synchronimpulse zugeführt werden und welche ein Schreib-/Lese-Steuersignal, ein Adreßsignal und ein Taktsignal für den Halbbildspeicher sowie der zweiten Bildwechselfrequenz entsprechende Synchronimpulse erzeugt, und welche in einem ersten Betriebszustand die Einschreib- und Auslesevorgänge für den Halbbildspeicher derart steuert, daß jedes Halbbild des Fernsehsignals in den Halbbildspeicher eingeschrieben und doppelt so schnell zweimal nacheinander ausgelesen wird, und welche in einem zweiten Betriebszustand die Einschreib- und Auslesevorgänge für den Halbbildspeicher derart steuert, daß nur jedes zweite Halbbild des Fernsehsignals in den Halbbildspeicher eingeschrieben und doppelt so schnell viermal nacheinander ausgelesen wird, und
- einer Ablenkschaltung, der das zeilenfrequenzverkoppelte Taktsignal und die der zweiten Bildwechselfrequenz entsprechenden Synchronimpulse zugeführt werden und welche Horizontal- und Vertikalablenksignale für eine Bildschirmdarstellung des Fernsehsignals mit der zweiten Bildwechselfrequenz im Zeilensprungverfahren erzeugt,
**dadurch gekennzeichnet**, daß zur Umschaltung zwischen den beiden Betriebszuständen der Speichersteuerschaltung (8) über den I²C-Bus (11) des Fernsehempfängers ein in der Bedieneinheit (10) erzeugtes Steuersignal zugeführt wird.

2. Anordnung zur Reduzierung des Flimmerns in Fernsehempfängern mit
- einem Halbbildspeicher, in den ein eine erste Bildwechselfrequenz aufweisendes Fernsehsignal eingeschrieben wird, und aus dem das Fernsehsignal doppelt so schnell ausgelesen wird, so daß das ausgelesene Signal die doppelte Bildwechselfrequenz aufweist,
- einer Schaltung zur Abtrennung der Synchronimpulse aus dem Fernsehsignal,
- einem Taktgenerator, welcher unter Verwendung der Synchronimpulse ein zeilenfrequenzverkoppeltes Taktsignal erzeugt,
- einer Speichersteuerschaltung, der das zeilenfrequenzverkoppelte Taktsignal und die aus dem Fernsehsignal abgetrennten Synchronimpulse zugeführt werden und welche ein Schreib-/Lese-Steuersignal, ein Adreßsignal und ein Taktsignal für den Halbbildspeicher sowie der zweiten Bildwechselfrequenz entsprechende Synchronimpulse erzeugt, und welche in einem ersten Betriebszustand die Einschreib- und Auslesevorgänge für den Halbbildspeicher derart steuert, daß jedes Halbbild des Fernsehsignals in den Halbbildspeicher eingeschrieben und doppelt so schnell zweimal nacheinander ausgelesen wird, und welche in einem zweiten Betriebszustand die Einschreib- und Auslesevorgänge für den Halbbildspeicher derart steuert, daß nur jedes zweite Halbbild des Fernsehsignals in den Halbbildspeicher eingeschrieben und doppelt so schnell viermal nacheinander ausgelesen wird, und

- einer Ablenkschaltung, der das zeilenfrequenzverkoppelte Taktsignal und die der zweiten Bildwechselfrequenz entsprechenden Synchronimpulse zugeführt werden und welche Horizontal- und Vertikalablenksignale für eine Bildschirmdarstellung des Fernsehsignals mit der zweiten Bildwechselfrequenz im Zeilensprungverfahren erzeugt,

**dadurch gekennzeichnet,** daß zur Umschaltung zwischen den beiden Betriebszuständen der Speichersteuerschaltung (8) ein im Fernsehsender erzeugtes, in den Austastlücken des Fernsehsignals übertragenes und im Fernsehempfänger in einer Abtrennschaltung (6) vom Fernsehsignal abgetrenntes Kennsignal (K) zugeführt wird.

3. Anordnung nach Anspruch 2, **dadurch gekennzeichnet,** daß die Abtrennschaltung (6) das Kennsignal (K) aus einem VPS-Code abtrennt.

FBAS

A/D — 1

DEC — 2

−(R−Y), −(B−Y)

Y

SPEI — 3

SP — 4

SPAI / D/A — 5

Y
−(B−Y)
−(R−Y)

WE   SC   A

SEP — 6

V1
K
H1

SYNC

TGEN — 7

CK

SPST — 8

V2
H2

ABL — 9

V−ABL
H−ABL

11 — I²C

BED — 10

EP 0 367 929 A2